# EUROPEAN PATENT SPECIFICATION

(11) **EP 2 071 484 B1**
(45) Date of publication and mention of the grant of the patent: **11.12.2019**
(21) Application number: 06810893.5
(22) Date of filing: 29.09.2006
(51) Int. Cl.: G06F 21/32

(54) **INFORMATION PROCESSOR AND INFORMATION MANAGEMENT METHOD**
INFORMATIONSPROZESSOR UND INFORMATIONSVERWALTUNGSVERFAHREN
PROCESSEUR D'INFORMATIONS ET PROCÉDÉ DE GESTION D'INFORMATIONS

(43) Date of publication of application: 17.06.2009
(73) Proprietor: Fujitsu Ltd., Kawasaki-shi, Kanagawa 211-8588 (JP)
(72) Inventor: SUZUKI, Masato, Kawasaki-shi, Kanagawa 211-8588 (JP); KOTANI, Seigo, Kawasaki-shi, Kanagawa 211-8588 (JP); TANAKA, Keishiro, Kawasaki-shi, Kanagawa 211-8588 (JP)
(74) Representative: Haseltine Lake Kempner LLP
(86) International application number: PCT/JP2006/319513
(87) International publication number: WO 2008/041286

(56) References cited:
- WO-A1-00/65770
- WO-A2-02/001328
- US-A1- 2002 184 538

## Description

### TECHNICAL FIELD

The present invention relates to information processing apparatuses and others having a chip implemented therein for independently performing a predetermined process.

### BACKGROUND ART

In recent years, a plurality of information processing apparatuses mutually perform data communication via a communication network, such as the Internet. Also, to prevent piracy and tampering of data transmitted and received at the time of data communication to improve reliability of data communication, a technique of encrypting data through encryption and an electronic authentication technique for authenticating an authorized user are performed.

However, when an encryption key for the encryption and electronic authentication is leaked to outside, problems may occur, such as tampering of encrypted data without authority and disguise as an authorized user. Thus, how such an encryption key should be managed has been an important issue.

To securely manage the encryption key for encryption, electronic authentication, and others, a technique has been generally implemented in which the user of the encryption key stores and carries the encryption key in an IC (Integrated circuit) card. In this technique, when the user operates the information processing apparatus, identity authentication for the user is performed with various information recorded in the IC card, and then encryption and electronic authentication are performed at the time of data communication. Note that Patent Document 1 suggests an information managing apparatus capable of flexibly and strictly updating a program and data for authentication.

Patent Document 1: International Publication Pamphlet No. WO 2005/106620

International Publication Pamphlet No. WO 2002/01328 discloses a biometric-based security circuit in which the user database, processor, and biometric map generation functions are all located on the same integrated circuit whose secure contents are inaccessible from external to the integrated circuit. Biometric data, such as a fingerprint, retina scan, or voiceprint, is taken from a user requesting access to restricted resources. The biometric data is transferred into integrated circuit, where it is converted to a biometric map and compared with a database of biometric maps stored in a non-volatile memory in the integrated circuit. The stored maps represents pre-authorized users, and a match triggers the security circuit to send a signal to a host processor authorizing the host processor to permit the requesting user access to the restricted resources.

International Publication Pamphlet No. WO 2000/65770 discloses a trusted sensor for authenticating biometric information used in an encryption system is provided. The trusted sensor is disposed on at least one integrated circuit and comprises a microprocessor, and a data memory coupled to the microprocessor. The data memory is configured to hold a plurality of templates representing enrolled biometric information, a biometric public key and private key pair corresponding to each of the plurality of templates, and a manufacturer public key and private key pair. The trusted sensor further comprises a functions section, also coupled to the microprocessor, which is configured to cause the microprocessor to perform various functions. The functions section includes a cryptographic library module, which stores one or more public key private key encryption functions and population functions for populating the biometric public key and private key pairs corresponding to each of the plurality of templates. The functions section also includes a feature extraction and template matching module, which stores instructions for extracting features created with a biometric image capture device coupled to the trusted sensor, and for populating the plurality of templates. Additional functions are also included in the functions section for matching sensed biometric information communicated from the biometric image capture device to the enrolled biometric information stored the data memory and, based on the match, for selecting a particular biometric private key and private key pair that will be used in the encryption system. The functions section also includes an authentication module, which stores instructions for certifying the trusted sensor to a host computer by executing the one or more encryption functions stored in the cryptographic module using the manufacturer private key and a host computer public key.

US 2002/184538 discloses a user authentication system that uses plural pieces of biometric information and secures a high security level is provided. Each biometric information and a combination of kinds of the biometric information are called combined biometric information. At the time of registration, plural kinds of user's biometric information are obtained via a biometric information input portion. A combined biometric information authentication strength calculating portion calculates an authentication strength for each combined biometric information, wherein the authentication strength indicates how easy the user's biometric information is distinguished from evaluation biometric information in an evaluation biometric information storing portion. A combined biometric information determining portion regards, as candidates, a series of the combined biometric information whose authentication strength satisfies an authentication strength required by an application, determines a combined biometric information to be used for the user authentication from among the candidates, and then notifies a combined biometric information registration portion of it. At the time of authentication, the biometric information input portion accepts an input of biometric information, and an authenticating portion matches the registered combined biometric information in the combined biometric information registration portion and the inputted combined biometric information.

### DISCLOSURE OF INVENTION

### PROMLEM TO BE SOLVED BY THE INVENTION

However, in the conventional technology, when the user operates the information processing apparatus, the IC card is always required. Therefore, if the user forgets to carry the IC card, for example, problems occur such that the user is not allowed to operate the information processing apparatus although the user is an authorized user.

Moreover, when the user lost the IC card, for example, the IC card may be handed to malicious third party and the encryption key stored in the IC card may be used without authority. Therefore, the technique in which the user carries the IC card is not necessarily safe.

That is, securely managing an encryption key unique to the user or the like without requiring the user to carry an IC card so as improve reliability of encryption and electronic authentication with the encryption key is an extremely important issue.

The present invention is to solve the problems of the conventional technology, and an object is to provide an information processing apparatus and information managing method capable of securely managing an encryption key unique to the user or the like without requiring the user to carry an IC card so as to improve reliability of encryption and electronic authentication with the encryption key.

### MEANS FOR SOLVING PROBLEM

According to an aspect of the invention, there is provided an information processing apparatus comprising a chip implemented in the information processing apparatus to independently perform a predetermined process, the chip including: a storage unit configured to store user unique information in which a single piece of biometric information of a user and different pieces of unique information for use when a unique process corresponding to the user is performed are associated with each other, wherein the single piece of biometric information corresponds to one of a plurality of authenticating methods; and an information processing unit is configured to: notify, during an initial registration process, information relating to safety of each of the different authenticating methods, information relating to identity rejection ratio of each of the different authenticating methods, and information relating to ratio of misidentification as another person of each of the different authenticating methods, so that the user selects one of the authenticating methods which is used for authentication, obtain the authenticating method and a first biometric information of the user, retrieve a second biometric information of the user which corresponds to the obtained authenticating method from the user unique information in the storage unit, when the first biometric information and the second biometric information match each other, obtain the different pieces of unique information corresponding to the second biometric information from the user unique information, and perform predetermined processes by using the different pieces of unique information.

In one embodiment, the unique information includes information about an encryption key unique to the user, and the information processing unit is configured to perform encryption of information using the encryption key.

In one embodiment, the unique information includes information about an encryption key based on a common key encryption system unique to the user, and the information processing unit is configured to generate an electronic signature using the encryption key.

Further in the above-described invention, according to still another aspect of the present invention, the user unique information may store different pieces of biometric information and different pieces of the unique information in association with each other.

In one embodiment, the user unique information further stores user authority information indicative of authority of the user over either one of a device and software or both implemented in the information processing apparatus in association with the single piece of biometric information, and the information processing unit is configured to perform an access control over either one of the device and the software or both implemented in the information processing apparatus based on the user authority information corresponding to the single piece of biometric information.

In one embodiment, the information relating to safety of each of the different authenticating methods comprises percentages.

According to another aspect of the invention, there is provided an information managing method for an information processing apparatus including a chip implemented in the information processing apparatus to independently perform a predetermined process, the method comprising: storing in a storage unit by the chip, user unique information in which a single piece of biometric information of a user and different pieces of unique information for use when a unique process corresponding to the user is performed are associated with each other, wherein the single piece of biometric information corresponds to one of a plurality of authenticating methods; and performing, by the chip, the steps of: notifying, during an initial registration process, information relating to safety of each of the different authenticating methods, information relating to identity rejection ratio of each of the different authenticating methods, and information relating to ratio of misidentification as another person of each of the different authenticating methods, so that the user selects one of the authenticating methods which is used for authentication, obtaining the authenticating method and a first biometric information of the user, retrieving a second biometric information of the user which corresponds to the obtained authenticating method from the user unique information in the storage unit, when the first biometric information and the second biometric information match each other, obtaining the different pieces of unique information corresponding to the second biometric information from the user unique information, and performing predetermined processes by using the different pieces of unique information.

### EFFECTS OF THE INVENTION

According to the present invention, the user unique information stores a single piece of biometric information and different pieces of the unique information in association with each other. Therefore, an elaborate access control over devices, systems, and programs can be performed.

Also, according to one embodiment of the present invention, the unique information includes information about an encryption key unique to the user, and encryption of information is performed using the encryption key. Therefore, the user can perform encryption of information with an encryption key unique to the user even without always carrying the encryption key.

Furthermore, according to one embodiment of the present invention, the unique information includes information about an encryption key based on a common key encryption system unique to the user, and an electronic signature is generated using the encryption key. Therefore, the user can generate an electronic signature with the encryption key unique to the user even without always carrying the encryption key.

Still further, according to one embodiment of the present invention, the user unique information further stores user authority information indicative of authority of the user over either one of a device and software or both implemented in the information processing apparatus in association with the single piece of biometric information, and an access control is performed over either one of the device and the software or both implemented in the information processing apparatus based on the user authority information corresponding to the single piece of biometric information of the user. Therefore, security of either one of devices and software or both implemented on the information processing apparatus can be improved.

### BRIEF DESCRIPTION OF DRAWINGS

Fig. 1 is a drawing for explaining general outlines and features of an information processing apparatus according to an embodiment;
Fig. 2 is a functional block diagram of the configuration of the information processing apparatus according to the present embodiment;
Fig. 3 is a drawing for explaining electronic certificates stored in a memory/storage;
Fig. 4 is a drawing for explaining inner-device information stored in the memory/storage;
Fig. 5 is a functional block diagram of the configuration of a biometric authenticating unit;
Fig. 6 is a drawing of an example of data structure of a bio-information management table;
Fig. 7 is a drawing of an example of data structure of an account-information management table;
Fig. 8 is a drawing of an example of data structure of a comparison-source bio information;
Fig. 9 is a drawing of an example of data structure of virtual-IC-card management information;
Fig. 10 is a drawing of an example of data structure of an authority-information management table;
Fig. 11 is a flowchart of the procedure of an initial registering process;
Fig. 12 is a flowchart of the procedure of a virtual-IC-card assigning process; and
Fig. 13 is a drawing of hardware configuration of the information processing apparatus.

### DESCRIPTION OF REFERENCE NUMERALS

- 10: bus
- 11, 130: CPU
- 12: ROM
- 13: RAM
- 14: HDD
- 15: HD
- 16: FDD
- 17: FD
- 18: display
- 19, 110: communication I/F
- 20: input key
- 21, 120: biometric sensor
- 22, 150: security chip
- 23: network
- 100: information processing apparatus
- 140: memory/storage
- 151: LSI unique-key storage unit
- 152: communication authenticating unit
- 153: monitoring unit
- 154: verifying unit
- 155: inner-device-information authenticating unit
- 156: biometric authenticating unit
- 157: storage unit
- 157a: bio-information management table
- 157b: account-information management table
- 157c: comparison-source bio information
- 157d: virtual-IC-card management information
- 157e: authentication-information management table

### BEST MODE(S) FOR CARRYING OUT THE INVENTION

Embodiments of the information processing apparatus and information managing method according to the present invention are explained in detail below based on the drawings. Note that the present invention is not meant to be restricted by these embodiments.

### EMBODIMENTS

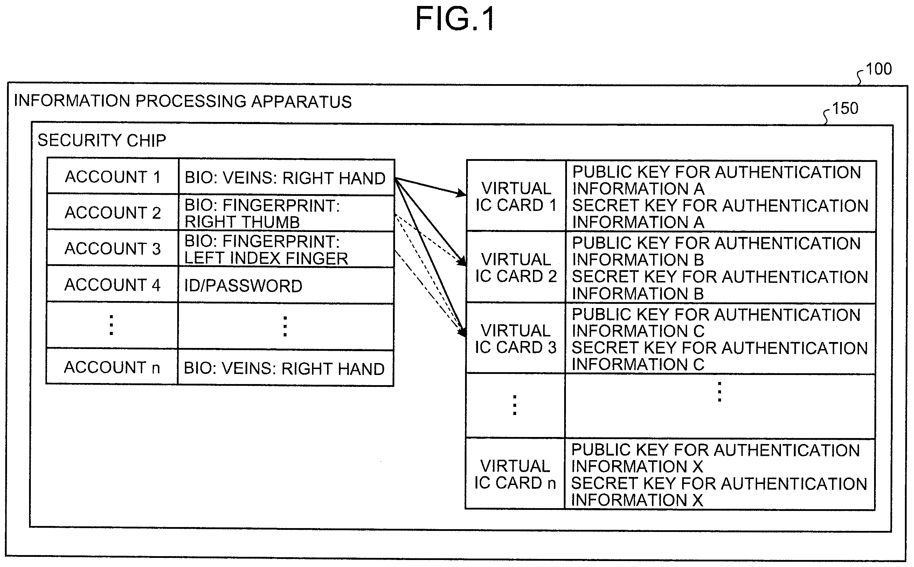

First, the general outlines and features of the information processing apparatus according to an embodiment are explained. Fig. 1 is a drawing for explaining general outlines and features of the information processing apparatus according to the present embodiment. As depicted in Fig. 1, an information processing apparatus 100 according to the present embodiment has implemented therein a security chip (for example, an LSI with a biometric authentication function disclosed in International Publication No. 2005/106620 pamphlet) 150. In the security chip 150, a plurality of virtual IC (Integrated circuit) cards (the virtual IC cards each having stored therein an encryption key as authentication information of the user and others) are stored. Also, the information processing apparatus 100 creates an account with various biometric information of the user (information such as fingerprint, iris, veins, and countenance of the user), and the created account and a virtual IC card(s) are stored in association with each other. Note that not a single but various pieces of biometric information according to the user are registered in an account.

Also, in the example depicted in Fig. 1, an account 1 is associated with virtual IC cards 1, 2, and 3, an account 2 is associated with virtual IC cards 2, and 3, and an account 3 is associated with a virtual IC card 3. When obtaining biometric information of the user from a biometric sensor, the information processing apparatus 100 retrieves a virtual IC card corresponding to the obtained biometric information (an account corresponding to the biometric information), and performs various processes (such as encryption and electronic authentication) by using the retrieved virtual IC card. For example, when the information processing apparatus 100 obtains biometric information (biometric information about veins on the right hand of the user) corresponding to the account 1 and the obtained biometric information is identical to biometric information registered in advance, various processes are performed by using the virtual IC cards 1, 2, and 3.

In this manner, in the information processing apparatus 100 according to the present embodiment, a different account for each feature of the biometric information is stored in the security chip 150 in association with a virtual IC card and, when the biometric information of the user is obtained, various processes are performed with the virtual IC card associated with the obtained biometric information. Therefore, the user does not have to carry the IC card, thereby reducing the load on the user. Also, since the user does not have to carry the IC card, a problem of leakage of information of the IC card can be solved. Here, although the case has been explained in which biometric information is registered in an account, the information registered in the account is not restricted to biometric information, and an ID/password may be registered (refer to an account 4 of Fig. 1).

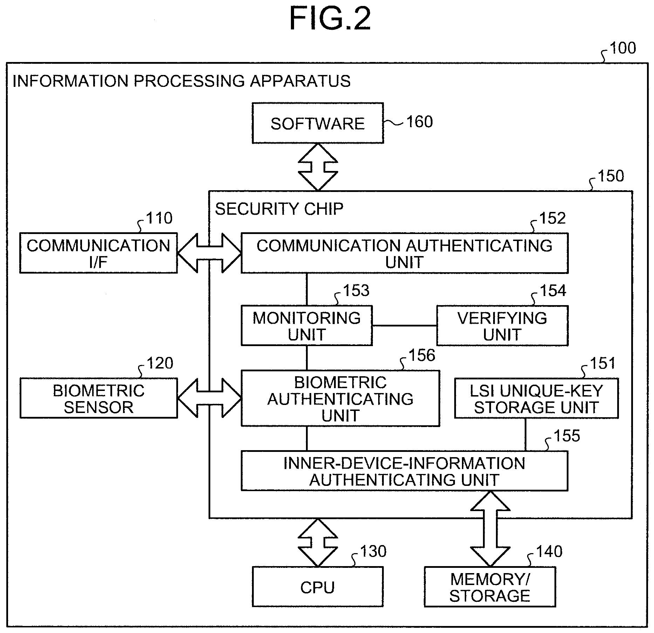

Next, the configuration of the information processing apparatus according to the present embodiment is explained. Fig. 2 is a functional block diagram of the configuration of the information processing apparatus according to the present embodiment. As depicted in Fig. 2, the information processing apparatus 100 is configured to include a communication I/F (interface) 110, a biometric sensor 120, a CPU 130, a memory/storage 140, and the security chip 150. Also, in the information processing apparatus 100, various pieces of software 160 are installed. The security chip 150 can obtain information about these pieces of software 160. Furthermore, the security chip 150 can also obtain information about peripheral devices connected to the information processing apparatus 100.

The communication I/F 110 controls interfacing between a network and the inside and controls input/output of data from an external device. As the communication I/F 110, a modem or a LAN (Local Area Network) adaptor can be adopted, for example. Here, although not shown, the information processing apparatus 100 performs data communication via the communication I/F 110 with a terminal at an authenticating station (certificate authority) and a service-provider terminal (such as a service-provider terminal managed by a vender or maker developing execution programs and various data associated with various services or by a manufacturer or a distributor of the information processing apparatus 100).

The biometric sensor 120 can be implemented by a fingerprint sensor, a camera, or a microphone, for example. The fingerprint sensor is a device that detects asperities of a fingerprint at approximately every 50 micrometers for conversion to an electric signal. As a fingerprint reading technique, a semiconductor type, an optical type, a pressure sensitive type, or a thermal type can be used, for example. The camera is a biometric sensor that takes a picture of an iris or retina of an eyeball. Also, the microphone is a biometric sensor that detects a voice print representing a feature of voice.

The CPU 130 is a device that controls the process of the entire information processing apparatus. The memory/storage 140 is a storage device that stores various pieces of information for use in the security chip 150 and others. This memory/storage 140 may be provided in any area inside of the security chip 150 or outside of the security chip 150 as long as it is in the information processing apparatus 100. When provided inside of the security chip 150, the memory/storage 140 can be prevented from being removed or tampered.

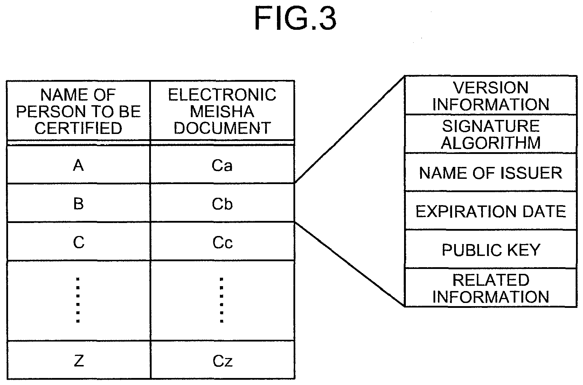

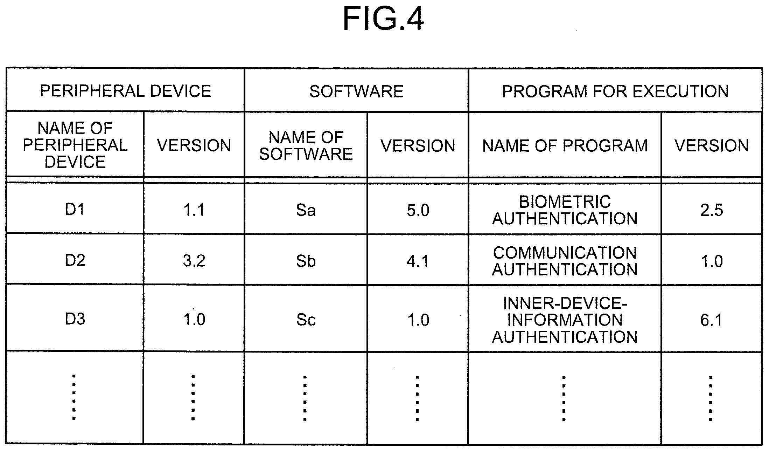

Here, contents stored in the memory/storage 140 are explained. Fig. 3 is a drawing for explaining electronic certificates stored in the memory/storage 140, and Fig. 4 is a drawing for explaining inner-device information stored in the memory/storage 140.

In Fig. 3, electronic certificates Ca to Cz are stored for respective persons to be certified. "Persons to be certified" are persons certified with the electronic certificates Ca to Cz, such as users, makers, venders, and authenticating stations. Also, the electronic certificates Ca to Cz each contain version information, signature algorithm, the name of the issuer, expiration date, public key, and other related information. These electronic certificates Ca to Cz are encrypted and stored by an inner-device-information authenticating unit 155 included in the security chip 150.

In Fig. 4, as inner-device information, names and version information of peripheral devices, software 160, and various pieces of programs to be executed installed on each hardware are stored.

The security chip 150 is implemented on a main board of the information processing apparatus 100. The security chip 150 is a chip that provides only a basic function for achieving security and privacy. Also, the security chip 150 is defined by TCG (Trusted Computing Group) specifications. The security chip 150 implemented in the single information processing apparatus 100 is configured not to be able to be implemented on another information processing apparatus. When the security chip 150 is removed from the information processing apparatus 100, the information processing apparatus 100 cannot be started up.

The security chip 150 has included therein an LSI unique-key storage unit 151, a communication authenticating unit 152, a monitoring unit 153, a verifying unit 154, the inner-device-information authenticating unit 155, and a biometric authenticating unit 156.

The LSI unique-key storage unit 151 is a storage unit that stores an encryption key unique to the security chip 150. The communication authenticating unit 152 is a processing unit that ensures safety of communication with outside of the information processing apparatus 100, for example, a service-provider terminal, an authenticating station's terminal, and others connected via a network. Specifically, the communication authenticating unit 152 performs identity authentication (PKI (Public Key Infrastructure) authentication) with an electronic certificate using an authenticating station, thereby making it possible to determine whether a person communicates with outside is a person authorized by the authenticating station.

The monitoring unit 153 is a processing unit that monitors passing of information inside of the information processing apparatus 100. The verifying unit 154 is a processing unit that performs verification of validity of information input from the outside to the security chip 150 and matching verification when safety of communication with the outside is authenticated by the communication authenticating unit 152.

The inner-device-information authenticating unit 155 is a processing unit that authenticates information inside the information processing apparatus 100 or the security chip 150 (inner-device information). The inner-device information is called environmental information, including information about peripheral devices obtained from the peripheral devices connected to the information processing apparatus 100 (for example, device names and version information), information about software 160 installed in the information processing apparatus 100 (for example, software names and version information), and various information stored in the memory/storage 140 (for example, electronic certificates).

Also, the inner-device-information authenticating unit 155 confidentially manages the information stored in the memory/storage 140. Specifically, the information obtained by the inner-device-information authenticating unit 155 is encrypted with a unique encryption key stored in the LSI unique-key storage unit 151 and is then stored in the memory/storage 140. On the other hand, when a call comes from another hardware or the like, the encrypted information is decrypted with a decryption key (stored in the LSI unique-key storage unit 151) paired with the encryption key. With this encryption and decryption, it is possible to authenticate that no tampering occurs in the information processing apparatus 100.

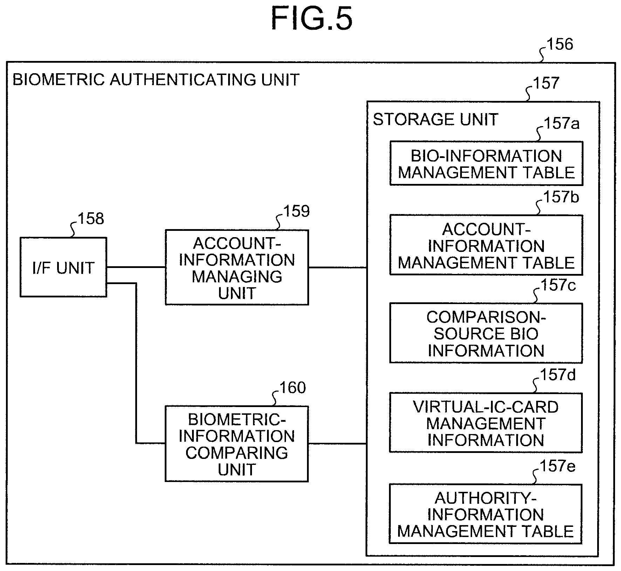

The biometric authenticating unit 156 is a processing unit that obtains biometric information of the user, and assigns information of the virtual IC card based on the obtained biometric information to the user. Fig. 5 is a functional block diagram of the configuration of the biometric authenticating unit 156. As depicted in Fig. 5, the biometric authenticating unit 156 is configured to include a storage unit 157, an I/F unit 158, an account-information managing unit 159, and a biometric-information comparing unit 160.

The storage unit 157 is a storage unit that stores various information, and has stored therein a bio-information management table 157a, an account-information management table 157b, a comparison-source bio information 157c, a virtual-IC-card management information 157d, and an authority-information management table 157e.

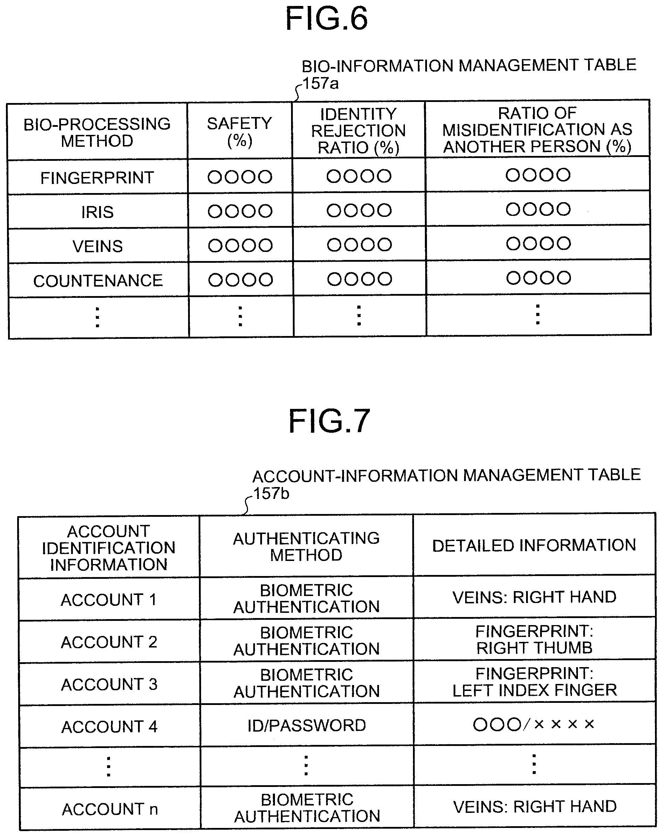

Of these, the bio-information management table 157a is a table having stored therein information about safety regarding various bio processes (biometric authentication). Fig. 6 is a drawing of an example of data structure of the bio-information management table 157a. As depicted in Fig. 6, the bio-information management table 157a has stored therein various bio-processing methods (biometric authentications with fingerprint, iris, veins, and countenance) in association with information about safety, identity rejection ratio, and ratio of misidentification as another person.

The account-information management table 157b is a table having stored therein an account and an authenticating method corresponding to the account in association with each other. Fig. 7 is a drawing of an example of data structure of the account-information management table 157b. As depicted in Fig. 7, the account-information management table 157b includes account identification information that identifies an account, an authenticating method, and detailed information. Specifically, in the first row of the account-information management table 157b, the authenticating method of "account 1" is "biometric authentication", and "biometric information to be authenticated is veins on the right hand". Also, in the fourth row of the account-information management table 157b, the authenticating method of "account 4" is "ID/password", and the ID/password is "○○○/××××".

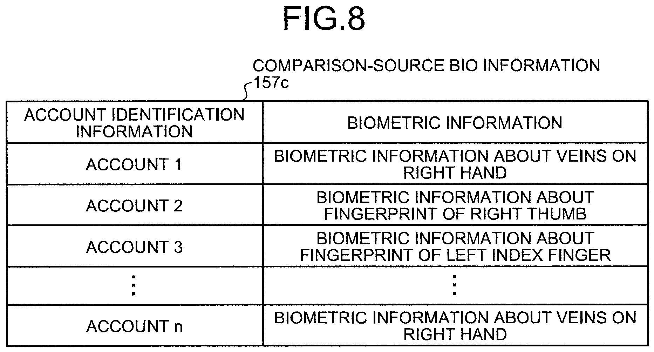

The comparison-source bio information 157c is information in which the account identification information stored in the account-information management table 157b and the biometric information (biometric information itself) are associated with each other. Fig. 8 is a drawing of an example of data structure of the comparison-source bio information. As depicted in Fig. 8, the comparison-source bio information 157c is formed of account identification information and biometric information. Specifically, in the first row of the comparison-source bio information 157c, biometric information corresponding to the account 1 (biometric information about veins on the right hand of the user) is stored.

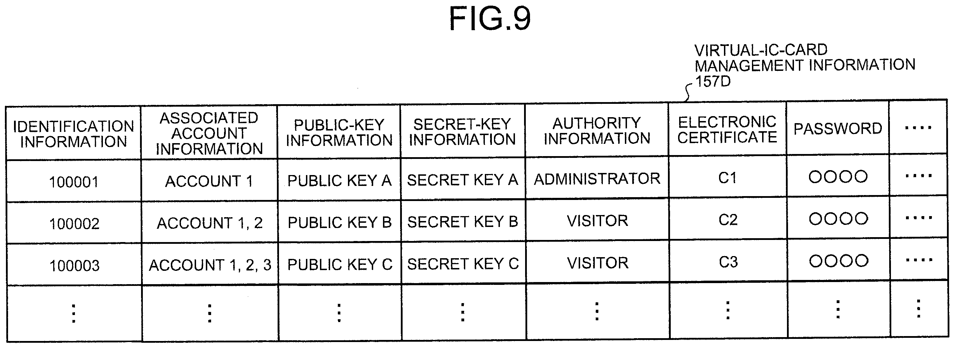

The virtual-IC-card management information 157d is information associated with information of the virtual IC card corresponding to the account. Fig. 9 is a drawing of an example of data structure of the virtual-IC-card management information 157d. As depicted in Fig. 9, the virtual-IC-card management information is formed of identification information that identifies each virtual IC card, associated account information indicative of each associated account, public-key information, secret-key information, authority information, electronic certificate, password, and others.

Specifically, the first row of the virtual-IC-card management information 157d indicates that a virtual IC card identified with identification information "100001" is associated with "account 1", and the public-key information recorded in that virtual IC card is "public key A", the secret-key information recorded therein is "secret key A", the authority information recorded therein is "Administrator", the electronic certificate recorded therein is "C1", and the password is "○○○○". That is, the user corresponding to the account 1 can perform various processes (for example, a process of generating an electronic signature by using the secret key A, or encryption) via the virtual IC card with the identification information "100001" even without carrying an IC card.

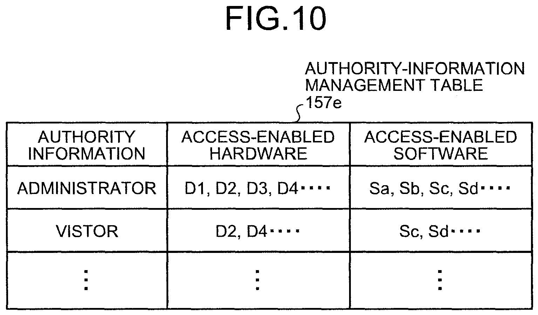

The authority-information management table 157e is a table having stored therein authority information and information about hardware and software allowed to be accessed with the authority information. Fig. 10 is a drawing of an example of data structure of the authority-information management table 157e. As depicted in Fig. 10, the authority-information management table 157e is formed of authority information, access-enable hardware, and access-enable software. Specifically, the first row of the authority-information management table 157e indicates that hardware allowed to be accessed with the authority information "Administrator" is "D1, D2, D3, D4..." and software allowed to be accessed therewith is "Sa, Sb, Sc, Sd ...".

The I/F unit 158 is a processing unit that performs data communication with the biometric sensor 120 and other devices and processing units in the information processing apparatus 100. The account-information managing unit 159 is a processing unit that manages the bio-information management table 157a, the account-information management table 157b, the comparison-source bio information 157c, the virtual-IC-card management information 157d, and the authority-information management table 157e stored in the storage unit 157 and performs a process regarding initial registration of biometric information of the user.

Here, a process of initial registration performed by the account-information managing unit 159 is explained. When accepting a request for initial registration of biometric information of the user, the account-information managing unit 159 authenticates the user with a password or the like (for example, the user logs-in with Administrator authority), and then outputs the bio-information management table 157a to a display (not shown) to cause a bio authentication scheme to be selected.

When the user uses the input device to select a bio authentication scheme and the account-information managing unit 159 obtains information about the bio authentication scheme, a new account is generated, and biometric information corresponding to the bio authentication scheme is obtained. At this point in time, the account-information managing unit 159 registers the new account, the authentication method corresponding to this account, and detailed information in the account-information management table 157b, and also registers the new account and the biometric information in the comparison-source bio information 157c.

Then, the account-information managing unit 159 requests the user for the biometric information corresponding to the newly-registered account and information about a virtual IC card to be associated with this account. When the requested biometric information is authenticated, various pieces of information corresponding to the new account is registered in the virtual-IC-card management information 157d. Here, when the requested biometric information does not match the biometric information newly registered, the account-information managing unit 159 outputs an error.

Here, the example is explained in which the account-information managing unit 159 registers the biometric information of the user in initial registration. In place of the biometric information, an ID/password can be registered. In this case, the account-information managing unit 159 registers the new account and the ID/password in association with each other in the account-information management table 157b.

The biometric-information comparing unit 160 is a processing unit that assigns, when accepting a request for using a virtual IC card, the virtual IC card to the user based on the biometric information of the user. Specifically, when accepting a request for assigning a virtual IC card from the user via the input device, the biometric-information comparing unit 160 outputs the account-information management table 157b to cause an account to be selected.

When the user uses the input device to select an account and the biometric-information comparing unit 160 obtains information about the account (selected by the user), biometric information corresponding to the account is obtained from the biometric sensor 120, and the obtained biometric information and the biometric information corresponding to the account are compared with each other to determine whether these pieces of biometric information match each other. Then, when these pieces of biometric information match each other, the virtual IC card corresponding to the account is assigned to the user.

Then, the user assigned the virtual IC card identified with the identification number "10001" (refer to Fig. 9), for example, can use various information stored in this virtual IC card to perform encryption, electronic authentication, and other processes. That is, the devices and processing units implemented in the information processing apparatus 100 use the information registered in this virtual IC card to perform encryption (such as a process of obtaining user-generated information and encrypting the obtained information), electronic authentication (such as a process of using a common key encryption system to provide an electronic signature to user-generated information), and other processes.

Also, the biometric-information comparing unit 160 compares the authority information registered in the virtual-IC-card management information 157d and the authority-information management table 157e for access control from the user. That is, the biometric-information comparing unit 160 outputs an error when the user does not have access authority over the hardware or software that is requested for access from the user.

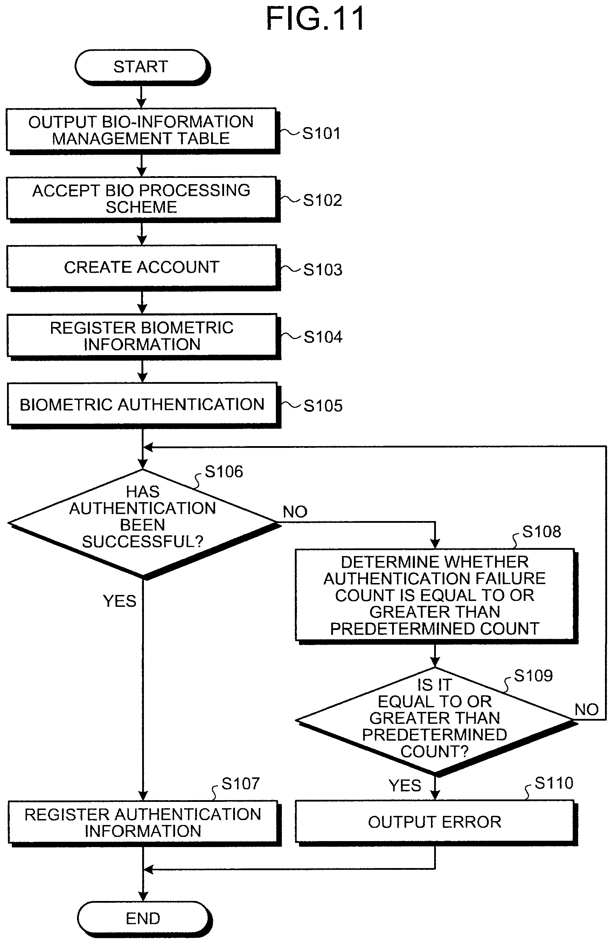

Next, the procedure of an initial registering process performed by the account-information managing unit 159 according to the present embodiment is explained. Fig. 11 is a flowchart of the procedure of an initial registering process. As depicted in Fig. 11, when accepting an initial registration request, the account-information managing unit 159 outputs the bio-information management table 157a (step S101), accepting a bio processing scheme (step S102).

The account-information managing unit 159 then creates a new account (step S103), obtains biometric information to be registered in the account, and associates the account and the biometric information with each other to register various information in the account-information management table 157b and the comparison-source bio information 157c (step S104).

Subsequently, the account-information managing unit 159 again obtains the biometric information corresponding to the newly-created account, and compares the obtained biometric information and the biometric information corresponding to the account for authentication (step S105). If authentication has been successful (when these pieces of biometric information match each other) ("Yes" at step S106), various authentication information corresponding to the account (various information to be registered in the virtual IC card) is obtained and registered in the virtual-IC-card management information 157d (step S107).

On the other hand, if authentication has failed ("No" at step S106), it is determined whether an authentication failure count is equal to or greater than a predetermined count (step S108). If the count is smaller than the predetermined count ("No" at step S109), the procedure goes to step S106. If the authentication failure count is equal to or greater than the predetermined count ("Yes" at step S109), an error is output (step S110).

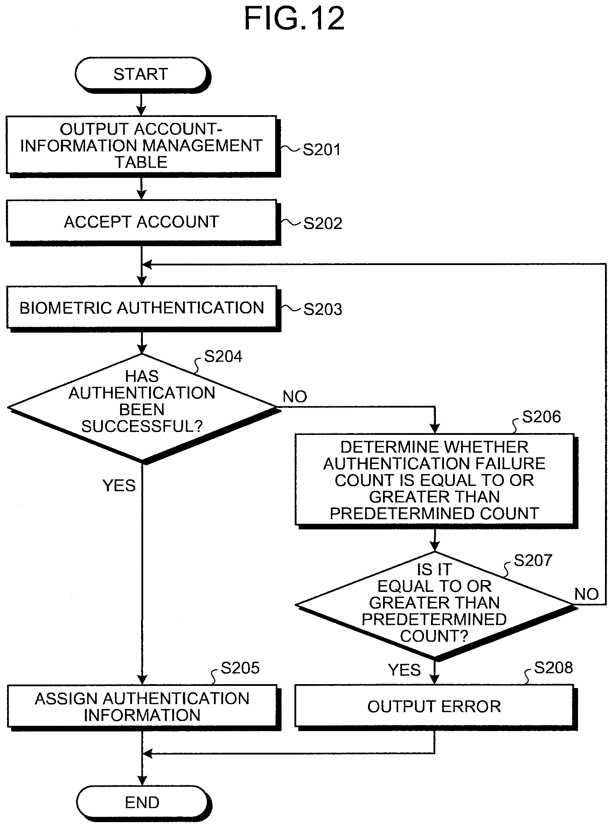

Next, a virtual-IC-card assigning process performed by the biometric-information comparing unit 160 according to the present embodiment is explained. Fig. 12 is a flowchart of the procedure of a virtual-IC-card assigning process. As depicted in Fig. 12, when obtaining a request for assigning a virtual IC card, the biometric-information comparing unit 160 outputs the account-information management table 157b (step S201), accepting a selection of an account (step S202).

The biometric-information comparing unit 160 then obtains biometric information corresponding to the account, and compares the obtained biometric information and the biometric information corresponding to the account registered in the comparison-source bio information 157c for biometric authentication (step S203). If authentication has been successful (if these pieces of biometric information match each other) ("Yes" at step S204), various authentication information corresponding to the user is assigned (step S205).

On the other hand, if authentication has failed ("No" at step S204), it is determined whether an authentication failure count is equal to or greater than a predetermined count (step S206). If the count is smaller than the predetermined count ("No" at step S207), the procedure goes to step S203. If the authentication failure count is equal to or greater than the predetermined count ("Yes" at step S207), an error is output (step S208).

In this manner, the biometric authenticating unit 156 has stored therein information about the virtual IC cards in association with the accounts and assigns the virtual IC card to the user according to the biometric information input from the user. Therefore, the user does not have to carry an IC card, thereby reducing the load on the user.

As has been explained above, the information processing apparatus 100 according to the present embodiment has implemented therein the security chip 150 that independently performs a predetermined process. In the security chip 150, information about a virtual IC card and biometric information of a user are registered in association with each other. When obtaining biometric information of the user from the biometric sensor 120, the biometric authenticating unit 156 retrieves information (various pieces of authentication information) of the virtual IC card corresponding to the obtained biometric information and assigns the retrieved various pieces of authentication information to the user. With such various pieces of authentication information, the information processing apparatus 100 performs encryption, an electronic signature process, and other processes. Therefore, the user does not have to always carry a card, thereby increasing convenience of the user.

Also, by using various combinations of identity authentication and virtual-IC-card information, it is possible to collectively manage and use current use patterns of using the information of the plurality of IC cards for each event. Furthermore, various pieces of information, that are recorded in an IC card currently widely available, are recorded as they are in the security chip 150 as information of the virtual IC card. By using such information, various processes can be performed. Therefore, in new development for biometric authentication, a system or program developer does not have to develop from zero at all but can follow an existing process using an IC card. Thus, an increase in development efficiency can be expected.

Also, not only one-to-one but also one-to-many, many-to-one, and many-to-many combinations of identity authentication with biometric information and virtual-IC-card information can be taken without logical contradiction. Thus, an elaborate access control over devices, systems, and programs can be performed. With this mechanism, a plurality of pieces of information of a plurality of virtual IC cards can be provided to a single user for use as access control information, and also the encryption key stored inside can be provided as appropriate for each event.

Here, the example is explained in which the information processing apparatus 100 according to the present embodiment uses the virtual IC card stored in the security chip 150 to perform various processes. However, the embodiment is not meant to be restrictive, and various pieces of authentication information may be read from an existing IC card to perform encryption and electronic authentication.

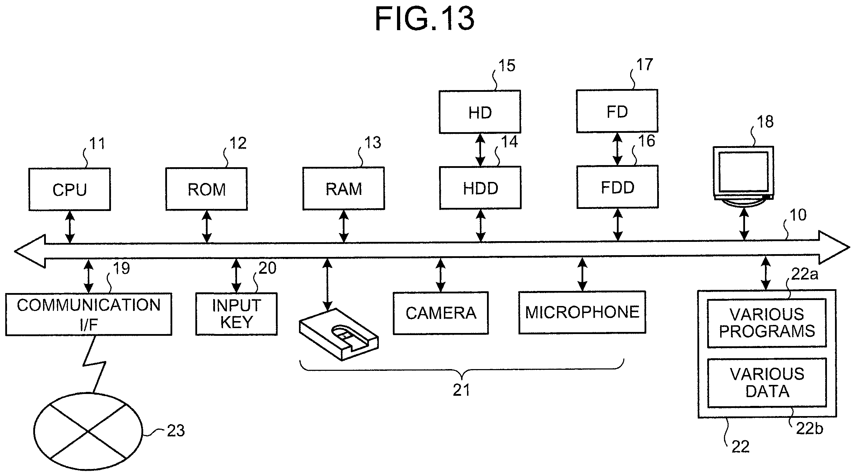

Next, the hardware configuration of the information processing apparatus 100 depicted in the present embodiment is explained. Fig. 13 is a drawing of hardware configuration of the information processing apparatus. In Fig. 13, the information processing apparatus is configured of a CPU 11, a ROM 12, a RAM 13, a HDD (hard disk drive) 14, a HD (hard disk) 15, a FDD (flexible disk drive) 16, a FD (flexible disk) 17, a display 18, a communication I/F 19, an input key (including a keyboard and a mouse) 20, a biometric sensor 21, and a security chip 22. Also, each component is connected to a bus 10.

Here, the CPU 11 controls the entire information processing apparatus. The ROM 12 has stored therein programs, such as a boot program. The RAM 13 is used as a work area of the CPU 11. The HDD 14 controls read/write of data to the HD 15 according to the control of the CPU 11. The HD 15 has stored therein data written under the control of the HDD 14.

The FDD 16 controls read/write of data to the FD 17 according to the control of the CPU 11. The FD 17 stores data written under the control of the FDD 16, or causes the data stored in the FD 17 to be read by the information processing apparatus.

Also, as a removable recording medium, in addition to the FD 17, a CD-ROM (CD-R, CD-RW), MO, DVD (Digital Versatile Disk), or a memory card may be used. The display 18 displays data including a cursor, an icon, or a tool box, such as documents, images, and function information. As the display 18, for example, a CRT, a TFT liquid-crystal display, or a plasma display can be adopted.

The communication I/F 19 corresponds to the communication I/F 110 depicted in Fig. 2, and is connected to a network 23, such as the Internet. The input key 20 includes keys for inputs of characters, numerals, various instructions, and others, to perform data input. Also, a touch-panel-type input pad or a numeric keypad may suffice.

The biometric sensor 21 and the security chip 22 correspond to the biometric sensor 120 and the security chip 150 depicted in Fig. 2, respectively. Also, the security chip 22 has stored therein various programs 22a for achieving various processing units depicted in Fig. 2, and various processes are performed from these programs. These various processes correspond to the communication authenticating unit 152, the monitoring unit 153, the verifying unit 154, the inner-device-information authenticating unit 155, and the biometric authenticating unit 156 depicted in Fig. 2. Also, the security chip 150 has stored therein various data 22b (corresponding to the information stored in the memory/storage 140 and the storage unit 157) for use in performing various processes.

In the foregoing, while the embodiments of the present invention have been explained, the present invention is not meant to be restricted to these, and can be implemented with various different embodiments within the scope of the claims.

Furthermore, among the processes explained in the embodiments, all or part of the processes explained as being automatically performed can be manually performed, or all or part of the processes explained as being manually performed can be automatically performed through a known method.

In addition, the process procedure, the control procedure, specific names, and information including various data and parameters in the specification and drawings can be arbitrarily changed unless otherwise specified.

Furthermore, each component depicted is conceptual in function, and is not necessarily physically configured as depicted. That is, the specific patterns of distribution and unification of the components are not meant to be restricted to those depicted in the drawings. All or part of the components can be functionally or physically distributed or unified in arbitrary units according to various loads and the state of use.

### INDUSTRIAL APPLICABILITY

As explained in the foregoing, the information processing apparatus and information managing method according to the present invention is useful for an information processing system that performs various processes using information unique to the user, and, in particular, is suitable in the case of reducing the load on the user and preventing leakage of private information.

## Claims

1. An information processing apparatus (100) comprising a chip (150) implemented in the information processing apparatus (100) to independently perform a predetermined process,
the chip (150) including:
a storage unit (157) configured to store user unique information in which a single piece of biometric information of a user and different pieces of unique information for use when a unique process corresponding to the user is performed are associated with each other, wherein the single piece of biometric information corresponds to one of a plurality of authenticating methods; and
an information processing unit (156) configured to:
notify, during an initial registration process, information relating to safety of each of the different authenticating methods, information relating to identity rejection ratio of each of the different authenticating methods, and information relating to ratio of misidentification as another person of each of the different authenticating methods, so that the user selects one of the authenticating methods which is used for authentication,
obtain the authenticating method and a first biometric information of the user,
retrieve a second biometric information of the user which corresponds to the obtained authenticating method from the user unique information in the storage unit (157),
when the first biometric information and the second biometric information match each other, obtain the different pieces of unique information corresponding to the second biometric information from the user unique information, and
perform predetermined processes by using the different pieces of unique information.

2. The information processing apparatus (100) according to claim 1, wherein
the unique information includes information (157d) about an encryption key unique to the user, and the information processing unit (156) is configured to perform encryption of information using the encryption key.

3. The information processing apparatus (100) according to claim 1, wherein
the unique information includes information (157d) about an encryption key based on a common key encryption system unique to the user, and the information processing unit (156) is configured to generate an electronic signature using the encryption key.

4. The information processing apparatus (100) according to claim 1, wherein
the user unique information further stores user authority (157e) information indicative of authority of the user over either one of a device and software or both implemented in the information processing apparatus (100) in association with the single piece of biometric information, and the information processing unit (156) is configured to perform an access control over either one of the device and the software or both implemented in the information processing apparatus (100) based on the user authority information (157e) corresponding to the single piece of biometric information.

5. The information processing apparatus (100) according to claim 1, wherein the information relating to safety of each of the different authenticating methods comprises percentages.

6. An information managing method for an information processing apparatus (100) including a chip (150) implemented in the information processing apparatus (100) to independently perform a predetermined process, the method comprising:
storing in a storage unit (157) by the chip (150), user unique information in which a single piece of biometric information of a user and different pieces of unique information for use when a unique process corresponding to the user is performed are associated with each other, wherein the single piece of biometric information corresponds to one of a plurality of authenticating methods; and
performing, by the chip (150), the steps of:
notifying, during an initial registration process, information relating to safety of each of the different authenticating methods, information relating to identity rejection ratio of each of the different authenticating methods, and information relating to ratio of misidentification as another person of each of the different authenticating methods, so that the user selects one of the authenticating methods which is used for authentication,
obtaining the authenticating method and a first biometric information of the user,
retrieving a second biometric information of the user which corresponds to the obtained authenticating method from the user unique information in the storage unit (157),
when the first biometric information and the second biometric information match each other, obtaining the different pieces of unique information corresponding to the second biometric information from the user unique information, and
performing predetermined processes by using the different pieces of unique information.

7. The information managing method according to claim 6, wherein the information relating to safety of each of the different authenticating methods comprises percentages.

8. A computer readable storage medium containing instructions that, when executed by an information processing apparatus (100) including a chip (150) implemented in the information processing apparatus (100) to independently perform a predetermined process, the program causes the chip (150) to execute the method according to claim 6.

## Patentansprüche

1. Informationsverarbeitungsvorrichtung (100), umfassend einen Chip (150), der zum unabhängigen Ausführen eines vorbestimmten Prozesses in der Informationsverarbeitungsvorrichtung (100) implementiert ist,
der Chip (150) enthaltend:
eine Speichereinheit (157), die zum Speichern von benutzereindeutiger Information konfiguriert ist, wobei ein einzelnes Stück von biometrischer Information eines Benutzers und verschiedene Stücke von eindeutiger Information zum Gebrauch, wenn ein eindeutiger Prozess, der dem Benutzer entspricht, ausgeführt wird, miteinander assoziiert werden, wobei das einzelne Stück von biometrischer Information einem von mehreren Authentifizierungsverfahren entspricht; und
eine Informationsverarbeitungseinheit (156), die zu Folgendem konfiguriert ist:
Melden, während eines anfänglichen Registrierungsprozesses, von Information hinsichtlich der Sicherheit von jedem der verschiedenen Authentifizierungsverfahren, von Information hinsichtlich des Identitätsablehnungsverhältnisses von jedem der verschiedenen Authentifizierungsverfahren, und von Information hinsichtlich des Verhältnisses von falscher Identifizierung als eine andere Person von jedem der verschiedenen Authentifizierungsverfahren, sodass der Benutzer eines der Authentifizierungsverfahren auswählt, das zur Authentifizierung benutzt wird,
Erhalten des Authentifizierungsverfahrens und einer ersten biometrischen Information des Benutzers,
Abrufen einer zweiten biometrischen Information des Benutzers, die dem erhaltenen Authentifizierungsverfahren entspricht, aus der benutzereindeutigen Information in der Speichereinheit (157),
wenn die erste biometrische Information und die zweite biometrische Information miteinander übereinstimmen, Erhalten der verschiedenen Stücke von eindeutiger Information, die der zweiten biometrischen Information entsprechen, aus der benutzereindeutigen Information, und Ausführen von vorbestimmten Prozessen unter Verwendung der verschiedenen Stücke von eindeutiger Information.

2. Informationsverarbeitungsvorrichtung (100) nach Anspruch 1, wobei
die eindeutige Information Information (157d) über einen Verschlüsselungsschlüssel enthält, der eindeutig für den Benutzer ist, und die Informationsverarbeitungseinheit (156) zum Ausführen von Verschlüsselung von Information unter Verwendung des Verschlüsselungsschlüssels konfiguriert ist.

3. Informationsverarbeitungsvorrichtung (100) nach Anspruch 1, wobei
die eindeutige Information Information (157d) über einen Verschlüsselungsschlüssel basierend auf einem gemeinsamen Schlüsselverschlüsselungssystem enthält, das eindeutig für den Benutzer ist, und die Informationsverarbeitungseinheit (156) zum Erstellen einer elektronischen Signatur unter Verwendung des Verschlüsselungsschlüssels konfiguriert ist.

4. Informationsverarbeitungsvorrichtung (100) nach Anspruch 1, wobei
die benutzereindeutige Information ferner Benutzerautoritätsinformation (157e) speichert, die Autorität des Benutzers über entweder ein Gerät oder eine Software oder beides anzeigt, welche in der Informationsverarbeitungsvorrichtung (100) assoziiert mit dem einzelnen Stück von biometrischer Information implementiert sind, und die Informationsverarbeitungseinheit (156) zum Ausführen von Zugriffssteuerung über entweder das Gerät oder die Software oder beides, welche in der Informationsverarbeitungsvorrichtung (100) implementiert sind, basierend auf der Benutzerautoritätsinformation (157e) entsprechend dem einzelnen Stück von biometrischer Information konfiguriert ist.

5. Informationsverarbeitungsvorrichtung (100) nach Anspruch 1, wobei die Information hinsichtlich Sicherheit von jedem der Authentifizierungsverfahren Prozentsätze umfasst.

6. Informationsverwaltungsverfahren für eine Informationsverarbeitungsvorrichtung (100), die einen Chip (150) enthält, der zum unabhängigen Ausführen eines vorbestimmten Prozesses in der Informationsverarbeitungsvorrichtung (100) implementiert ist, das Verfahren umfassend:
Speichern, in einer Speichereinheit (157) durch den Chip (150), von benutzereindeutiger Information, wobei ein einzelnes Stück von biometrischer Information eines Benutzers und verschiedene Stücke von eindeutiger Information zum Gebrauch, wenn ein eindeutiger Prozess, der dem Benutzer entspricht, ausgeführt wird, miteinander assoziiert werden, wobei das einzelne Stück von biometrischer Information einem von mehreren Authentifizierungsverfahren entspricht; und
Ausführen, durch den Chip (150), von folgenden Schritten:
Melden, während eines anfänglichen Registrierungsprozesses, von Information hinsichtlich der Sicherheit von jedem der verschiedenen Authentifizierungsverfahren, von Information hinsichtlich des Identitätsablehnungsverhältnisses von jedem der verschiedenen Authentifizierungsverfahren, und von Information hinsichtlich des Verhältnisses von falscher Identifizierung als eine andere Person von jedem der verschiedenen
Authentifizierungsverfahren, sodass der Benutzer eines der Authentifizierungsverfahren auswählt, das zur Authentifizierung benutzt wird,
Erhalten des Authentifizierungsverfahrens und einer ersten biometrischen Information des Benutzers,
Abrufen einer zweiten biometrischen Information des Benutzers, die dem erhaltenen Authentifizierungsverfahren entspricht, aus der benutzereindeutigen Information in der Speichereinheit (157),
wenn die erste biometrische Information und die zweite biometrische Information miteinander übereinstimmen, Erhalten der verschiedenen Stücke von eindeutiger Information, die der zweiten biometrischen Information entsprechen, aus der benutzereindeutigen Information, und Ausführen von vorbestimmten Prozessen unter Verwendung der verschiedenen Stücke von eindeutiger Information.

7. Informationsverwaltungsverfahren nach Anspruch 6, wobei die Information hinsichtlich Sicherheit von jedem der Authentifizierungsverfahren Prozentsätze umfasst.

8. Maschinenlesbares Speichermedium, das Anweisungen enthält, wobei, wenn sie durch eine Informationsverarbeitungsvorrichtung (100), welche einen Chip (150) enthält, der zum unabhängigen Ausführen eines vorbestimmten Prozesses in der Informationsverarbeitungsvorrichtung (100) implementiert ist, ausgeführt werden, das Programm bewirkt, dass der Chip (150) das Verfahren nach Anspruch 6 ausführt.

## Revendications

1. Appareil de traitement d'informations (100) comprenant une puce (150) mise en œuvre dans l'appareil de traitement d'informations (100) pour effectuer indépendamment un processus prédéterminé,
la puce (150) comprenant :
une unité de stockage (157) configurée pour stocker des informations uniques d'utilisateur dans lesquelles un élément unique d'informations biométriques d'un utilisateur et différents éléments d'informations uniques à utiliser lorsqu'un processus unique correspondant à l'utilisateur est exécuté sont associés, dans lequel l'élément unique d'informations biométriques correspond à l'un d'une pluralité de procédés d'authentification ; et
une unité de traitement d'informations (156) configurée pour :
notifier, lors d'un processus d'enregistrement initial, des informations relatives à la sécurité de chacun des différents procédés d'authentification, des informations relatives au taux de rejet d'identité de chacun des différents procédés d'authentification, et des informations relatives au taux d'erreur d'identification en tant qu'autre personne de chacun des différents procédés d'authentification, de sorte que l'utilisateur sélectionne l'un des procédés d'authentification utilisés pour une authentification,
obtenir le procédé d'authentification et une première information biométrique de l'utilisateur,
récupérer une seconde information biométrique de l'utilisateur qui correspond au procédé d'authentification obtenu à partir des informations uniques d'utilisateur dans l'unité de stockage (157),
lorsque la première information biométrique et la deuxième information biométrique correspondent l'une à l'autre, obtenir les différents éléments d'informations uniques correspondant à la seconde information biométrique à partir des informations uniques d'utilisateur, et
effectuer des processus prédéterminés en utilisant les différents éléments d'informations uniques.

2. Appareil de traitement d'informations (100) selon la revendication 1, dans lequel
les informations uniques comprennent des informations (157d) sur une clé de cryptage unique pour l'utilisateur, et l'unité de traitement d'informations (156) est configurée pour effectuer le cryptage d'informations à l'aide de la clé de cryptage.

3. Appareil de traitement d'informations (100) selon la revendication 1, dans lequel
les informations uniques comprennent des informations (157d) sur une clé de cryptage basée sur un système de cryptage à clé commune unique pour l'utilisateur, et l'unité de traitement d'informations (156) est configurée pour générer une signature électronique à l'aide de la clé de cryptage.

4. Appareil de traitement d'informations (100) selon la revendication 1, dans lequel
les informations uniques d'utilisateur stockent en outre des informations d'autorité d'utilisateur (157e) indiquant l'autorité de l'utilisateur sur l'un ou l'autre parmi un dispositif et/ou un logiciel mis en œuvre dans l'appareil de traitement d'informations (100) en association avec l'élément unique d'informations biométriques, et l'unité de traitement d'informations (156) est configurée pour effectuer un contrôle d'accès sur l'un ou l'autre parmi le dispositif et le logiciel ou les deux, mis en œuvre dans l'appareil de traitement d'informations (100) sur la base des informations d'autorité d'utilisateur (157e) correspondant à l'élément unique d'informations biométriques.

5. Appareil de traitement d'informations (100) selon la revendication 1, dans lequel les informations relatives à la sécurité de chacun des différents procédés d'authentification comprennent des pourcentages.

6. Procédé de gestion d'informations pour un appareil de traitement d'informations (100) comprenant une puce (150) mis en œuvre dans l'appareil de traitement d'informations (100) pour exécuter de manière indépendante un processus prédéterminé, le procédé comprenant les étapes consistant à :
stocker dans une unité de stockage (157), par la puce (150), des informations uniques d''utilisateur dans lesquelles un élément unique d'informations biométriques d'utilisateur et différents éléments d'informations uniques à utiliser lorsqu'un processus unique correspondant à l'utilisateur est exécuté sont associés, dans lequel l'élément unique d'informations biométriques correspond à l'un d'une pluralité de procédés d'authentification ; et
effectuer, par la puce (150), les étapes consistant à :
notifier, lors d'un processus d'enregistrement initial, des informations relatives à la sécurité de chacun des différents procédés d'authentification, des informations relatives au taux de rejet d'identité de chacun des différents procédés d'authentification et des informations relatives au taux d'erreur d'identification en tant qu'autre personne de chacun des différents procédés d'authentification, de sorte que l'utilisateur sélectionne l'un des méthodes d'authentification utilisés pour une authentification,
obtenir le procédé d'authentification et une première information biométrique de l'utilisateur,
récupérer une seconde information biométrique de l'utilisateur qui correspond au procédé d'authentification obtenu à partir des informations uniques d'utilisateur dans l'unité de stockage (157),
lorsque les premières informations biométriques et les secondes informations biométriques correspondent les unes aux autres, obtenir les différents éléments d'informations uniques correspondant à la seconde information biométrique à partir des informations uniques d'utilisateur, et
effectuer des processus prédéterminés en utilisant les différents éléments d'informations uniques.

7. Procédé de gestion d'informations selon la revendication 6, dans lequel les informations relatives à la sécurité de chacun des différents procédés d'authentification comprennent des pourcentages.

8. Support de stockage lisible par ordinateur contenant des instructions qui, lorsqu'elles sont exécutées par un appareil de traitement d'informations (100) comprenant une puce (150) mise en œuvre dans l'appareil de traitement d'informations (100) pour exécuter indépendamment un processus prédéterminé, amènent la puce (150) à exécuter le procédé selon la revendication 6.
